# EUROPEAN PATENT SPECIFICATION

(11) **EP 2 290 275 B1**
(45) Date of publication and mention of the grant of the patent: **28.03.2012**
(21) Application number: 10173664.3
(22) Date of filing: 23.08.2010
(51) Int. Cl.: F16K 11/087

(54) **Shut off and test valve for gas plants**
Absperr- und Probeventil für Vergasungsanlage
Vanne de fermeture et d'échantillon pour une installation de gaz

(30) Priority: 24.08.2009 IT MI20091499
(43) Date of publication of application: 02.03.2011
(73) Proprietor: FIMCIM S.P.A., 20121 Milano (MI) (IT)
(72) Inventor: Tedeschi, Bernardo, 42100 Reggio Emilia (IT)
(74) Representative: Ponzellini, Gianmarco

(56) References cited:
- EP-A1- 0 566 920
- US-A- 3 459 228
- US-A1- 2008 202 607

## Description

The present invention relates to a shut-off and test valve for gas plants, in particular a valve for enabling testing of a combustible gas dispensing plant, for example methane.

Testing a gas dispensing plant is carried out by placing a test gas in the plant in order to verify that there are no leaks and that the plant is capable of functioning at operating pressures established in its design.

A test valve is generally mounted at the position of the plant's counter and beyond functioning as a normal plant check valve, i.e. destined to enable or disenable gas flow in the plant, it is provided with a supplementary inlet through which a test gas can be introduced into the plant during the testing operations.

Shut-off valves have been disclosed for example in documents EP 0 566 920 or US 2008/0202607.

Known valves in the prior art exhibit various defects.

Firstly if the test gas inlet opening is accidentally left open after testing operations, known valves are not able to prevent a gas leak through the opening during normal functioning of the plant, with the risk of explosion and leakage of the gas into the environments where the plant is installed.

Further, during the testing stage, if by mistake a test gas is injected into the plant at an excessive pressure, there is the risk of damage to the plant counter; in other words, the known valves are not able to prevent the test gas from being injected by mistake into the counter associated to the plant, with the risk of damaging the counter and injecting the test gas into the supply network connected to the counter, thus mixing it with the combustible gas of the supply network.

Patent JP11304013 describes a shut-off and test valve for gas plants which includes a valve body comprising, beyond the normal inlet and outlet for the gas, also an inspection access for plant control. The valve of the document is however configurable in a plurality of positions which enable among other things placing the test access in communication with the network upstream of the user, i.e. with the counter.

The above reiterates all the safety problematics described herein above, as the functioning mode increases the risks of damage to the plant in a case of erroneous use of the valve.

The aim of the present invention is to provide a shut-off and test valve for a gas dispensing plant internally of a building which obviates the above-indicated drawbacks.

The present invention comprises a shut-off and test valve for gas dispensing plants which comprises the technical characteristics set out in the claims. Thanks to the invention, during normal functioning of the plant and during plant testing operations, it is guaranteed that accidental leakage of gas through the valve cannot occur.

It is further guaranteed that damage cannot occur to the counter associated to the plant if, during the stage of testing the plant, a test gas is introduced into the plant at an excessive pressure.

Finally, it is guaranteed that during the testing operations of the plant the test gas cannot be introduced into the gas supply piping.

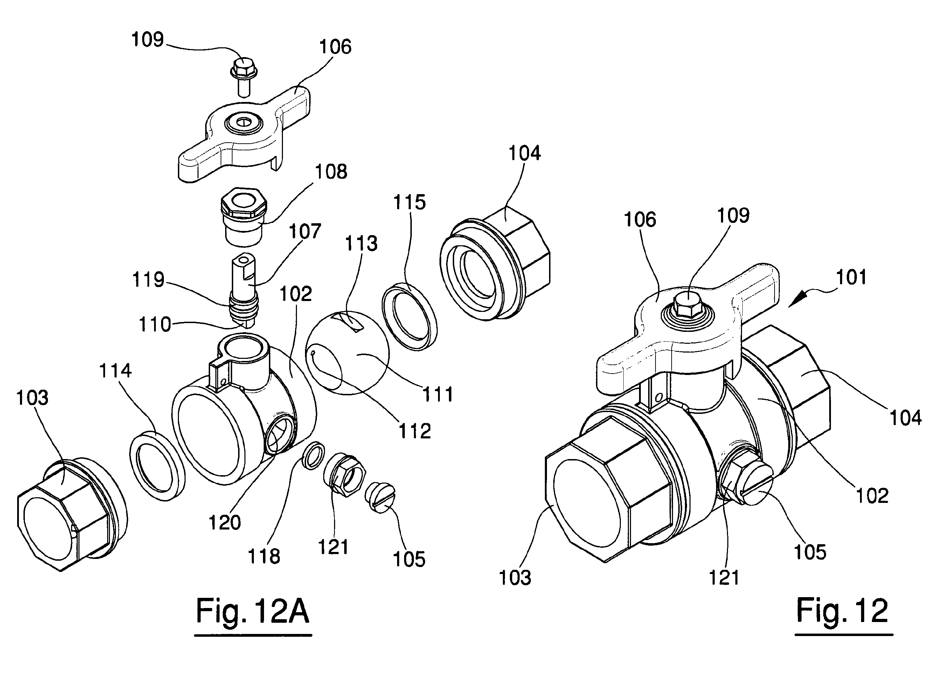

The invention can be better understood and actuated on the basis of the description that follows and the accompanying figures of the drawings, in which:
Figure 1 is a perspective view of a first actuation of a valve of the invention;
Figure 1A is an exploded perspective view of the valve of figure 1;
Figure 2 is a view from above of the valve of figure 1;
Figure 3 is an elevation of the valve of figure 1;
Figure 4 is a view from the left of figure 3;
Figure 5 is section V-V of Figure 2;
Figure 6 is section VI-VI of Figure 3;
Figure 7 is section VII-VII of Figure 4;
Figures from 8 to 10 are sections as in Figure 7 which illustrate a first, second and third operating position, respectively, of the valve of Figure 1;
Figure 11 is a larger-scale detail of Figure 10;
Figure 12 is a perspective view of a second embodiment of a valve of the invention;
Figure 12A is an exploded perspective view of the valve of Figure 12;
Figure 13 is a view from above of the valve of Figure 12;
Figure 14 is a view in elevation of the valve of
Figure 12;

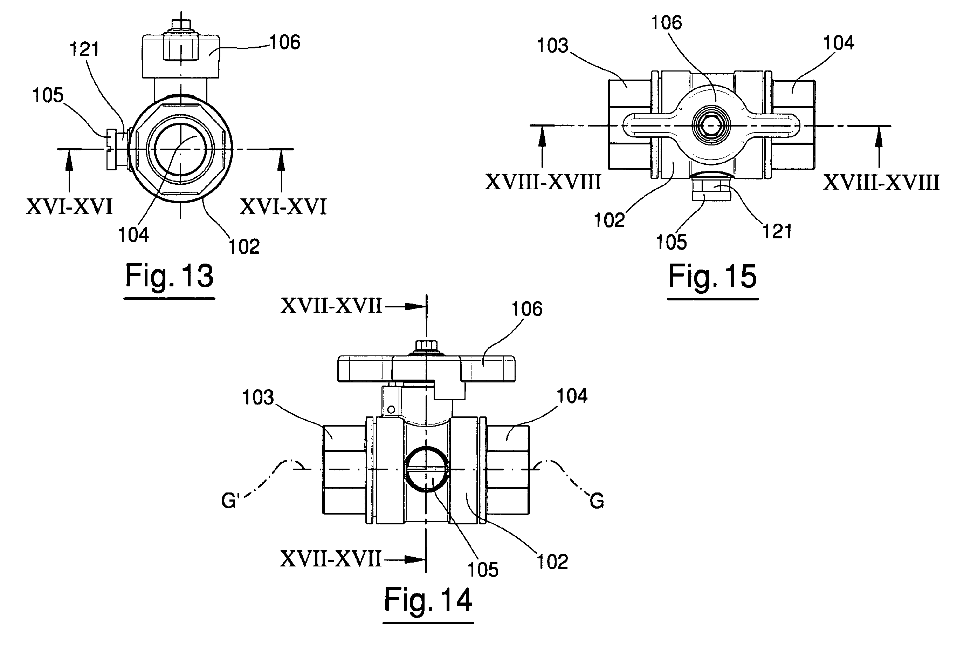

Figure 15 is a view from the left of Figure 14;

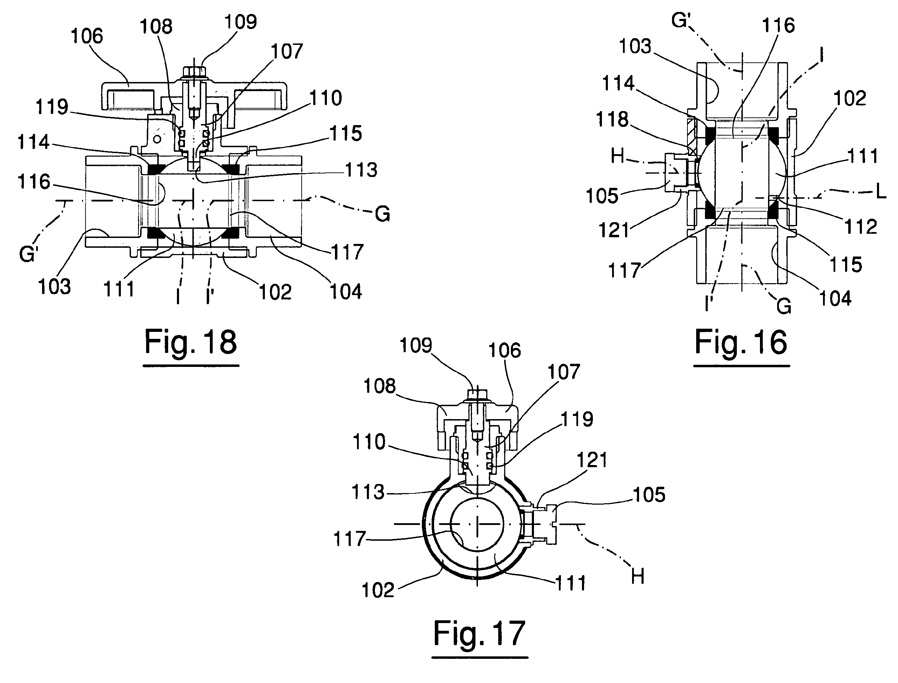

Figure 16 is section XVI-XVI of Figure 13;
Figure 17 is section XVII-XVII of Figure 14;
Figure 18 is section XVIII-XVIII of Figure 15;
Figures from 19 to 21 are sections as in Figure 16 which illustrate a first, second and third operating position, respectively, of the valve of figure 12;

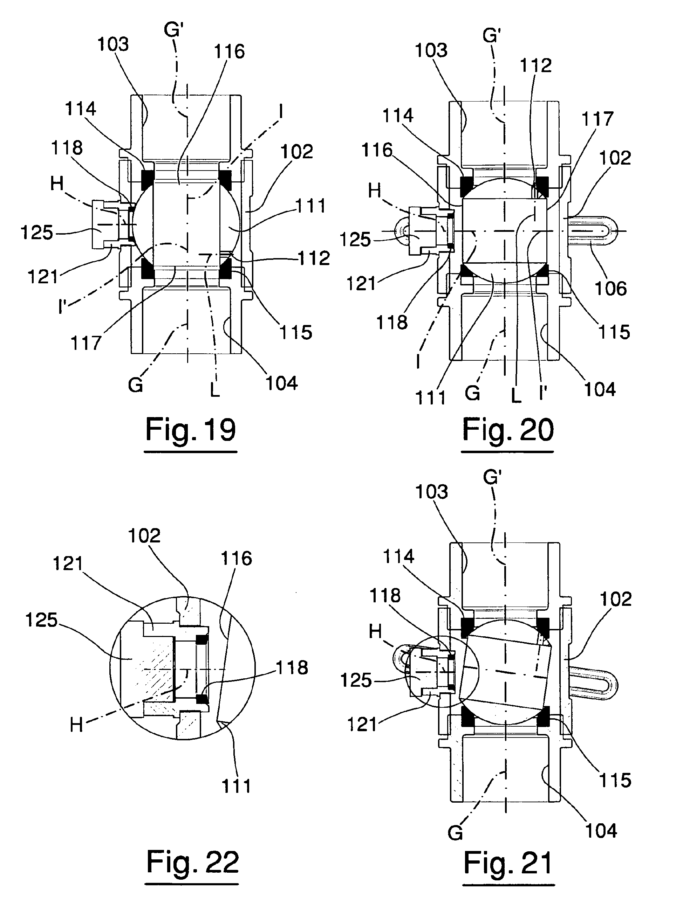

Figure 22 is a larger-scale detail of Figure 21;

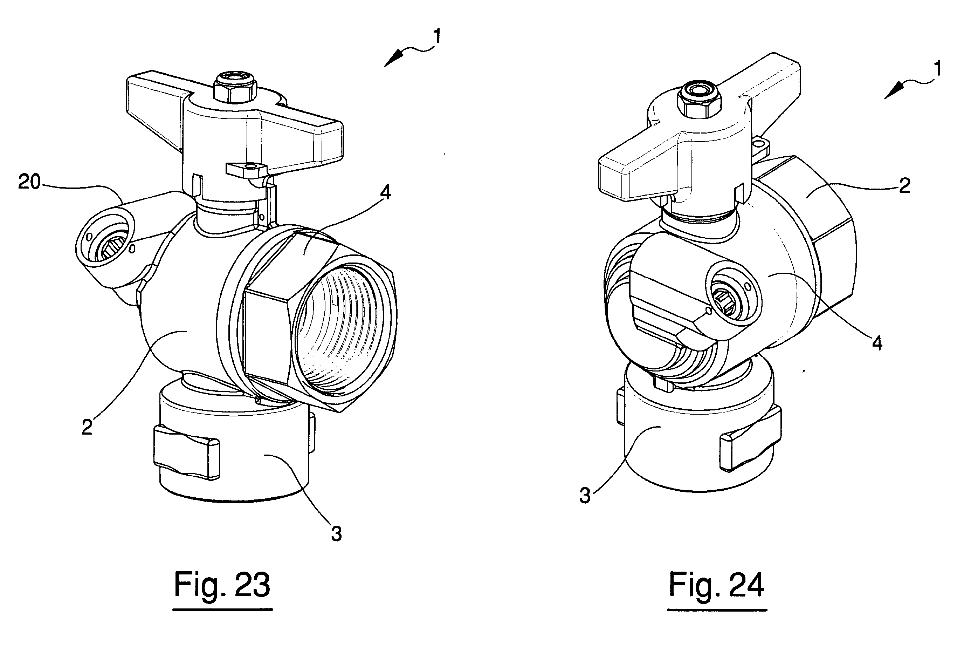

Figures 23 and 24 are a perspective view of a third preferred embodiment of a valve of the invention;

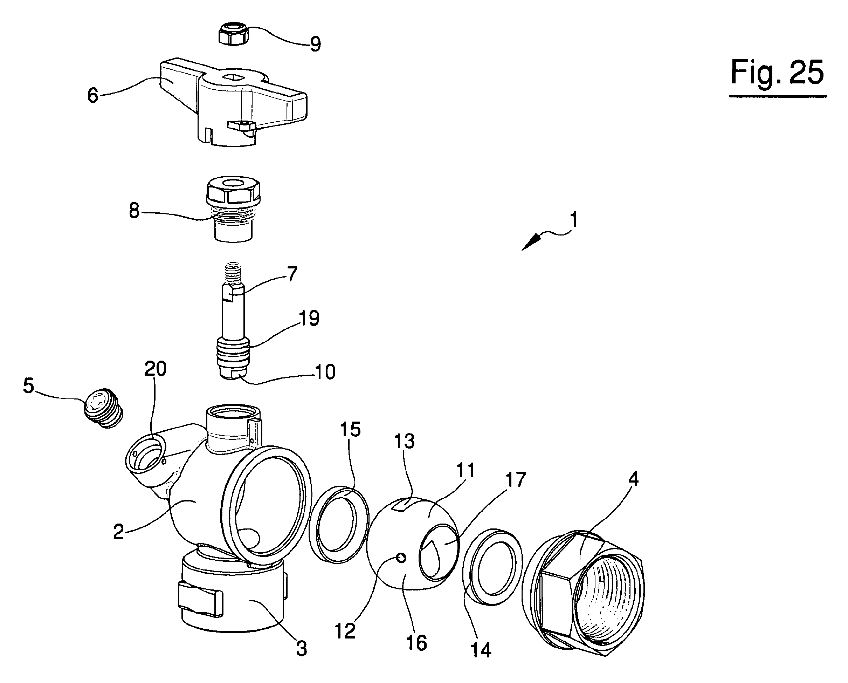

Figure 25 is an exploded perspective view of the valve of Figure 23;

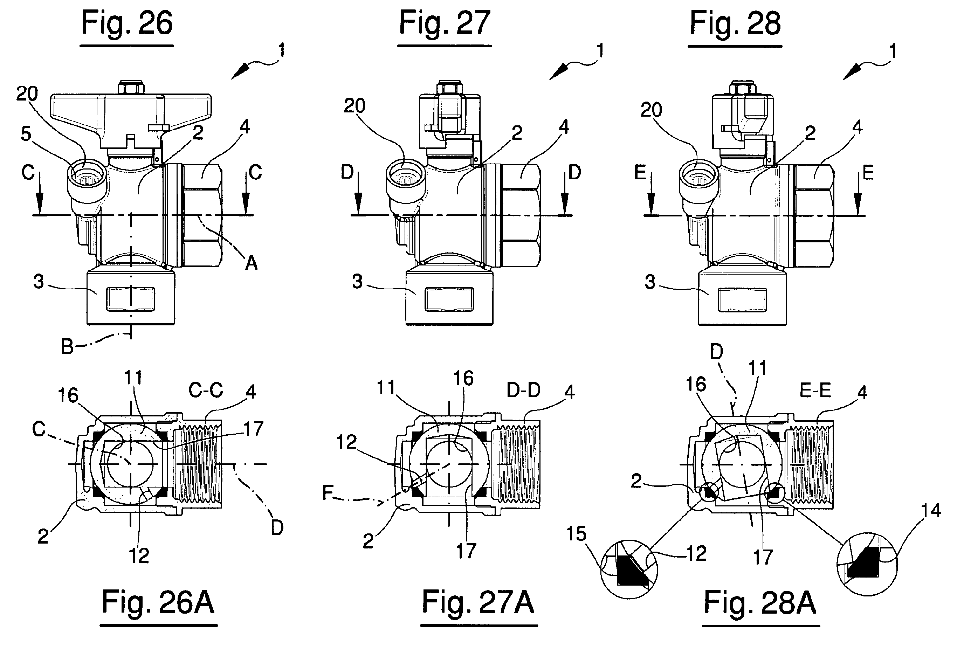

Figures 26, 27 and 28 are corresponding lateral views of the valve of figure 23 in an open, closed and partially closed condition; and
Figures 26A, 27A and 28A are corresponding section views according to axes C-C, D-D and E-E of the valve of figures 26, 27 and 28 in the open, closed and partially closed positions.

Figures from 1 to 11 illustrate a first version of a valve 1 of the invention, which comprises a hollow valve body 2 provided with an inlet 4 destined to be connected with a combustible gas supply network, for example methane, and an outlet 3 destined to be connected to a dispensing plant of the combustible gas in a building. In the first version, the inlet 4 and the outlet 3 have respective axes A and B which are substantially perpendicular to one another.

The valve body 2 is further provided with a further inlet 20 that can be used to inject a pressurised test gas into the dispensing plant in order to test the dispensing plant, with the aim of verifying that there are no leaks which might cause infiltrations of the combustible gas into the building. The further inlet 20 has an axis E that is substantially perpendicular to the axes A and B of the inlet 4 and the outlet 3. A connecting element 21 is connected to the further inlet 20, for introducing the test gas, provided with a first seal gasket 18 and a closing element 5, for example a screw cap, for closing the inlet 20 when the inlet is not in use. The first seal gasket 18 serves to guarantee a gas seal between the connecting element 21 and the valve body 2, such that there can be no leakage of gas between the connecting element 21 and the valve body 2.

The valve 1 is destined to be connected to the combustible gas supply network through a gas flow gauge, commonly known as a counter. In other words, the valve 1 is connected with its inlet 4 at the outlet of the counter and with its outlet 3 at the building dispensing plant.

A shutter 11 is arranged internally of the valve 1 body 2, which shutter 11 is constituted by a hollow spherical element provided with a first opening 16 and a second opening 17, also having respective axes C and D which are substantially mutually perpendicular. The first opening 16 and the second opening 17 are destined to enable communication between the inlet 4 and the outlet 3 of the valve body 2, via the shutter 11.

A seating 13 is afforded on the surface of the shutter 11, which seating 13 is destined to couple with an appendage 10 of a manoeuvring element 7 provided with a second seal gasket 19 and fixed, via a connecting element 8 and a bolt 9, to a knob 6, by means of which the manoeuvring element 7 is activated to command a rotation of the shutter 11. The second seal gasket 19 serves to guarantee a gas seal between the manoeuvring element 7 and the valve body 2, such that there can be no leakage of gas between the manoeuvring element 7 and the valve body 2.

A third seal gasket 14 and a fourth seal gasket 15 are further associated to the shutter 11, arranged on opposite sides thereof and destined to guarantee a gas seal between the shutter 11 and the valve body 2, such that there can be no gas leakage between the shutter 11 and the valve body 2.

The shutter 11 is further provided with a third opening 12, destined to place the further inlet 20 of the valve body 2 in communication with the outlet 3, via the shutter 11, in order to enable introduction of pressurised test gas into the plant to be tested. The dimensions of the third opening 12 are much smaller than those of the first opening 16 and the second opening 17 of the shutter 11.

The position and dimensions of the third opening 12 of the shutter 11 are selected such that when the shutter 11 is positioned in a first operating position, such as to place the inlet 4 and the outlet 3 of the valve body 2 in communication, in order to enable supply to the building dispensing plant from the combustible gas supply network, any communication between the inlet 4, the outlet 3 and the further inlet 20 is prevented. This guarantees against the risk that the further inlet 20 can communicate with the supply network or with the building dispensing plant, in the normal functioning of the plant, if, after the testing of the plant, the further inlet 20 is not closed, by mistake, with the screw cap 5, or if the screw cap 5 is removed. In this way the risk of combustible gas infiltrations into the building through the further inlet 20 of the valve body 2 is prevented.

The dimensions and the position of the third opening 12 of the shutter 11 are further chosen such as to enable the shutter 11, in a second operating position, to establish a communication between the further inlet 20 and the outlet 3 of the valve body 2, preventing at the same time there being a communication between the further inlet 20 and the inlet 4 of the valve body 2, or between the inlet 4 and the outlet 3, such as to prevent the pressurised test gas introduced into the valve body 2 from entering the counter and damaging it, or from getting into the supply network and mixing with the combustible gas therefrom. For example, the third opening 12 can have a diameter of about a tenth of the diameter of the first opening 16 and the second opening 17 and an axis F which is coplanar with the axis C of the first opening 16 and inclined by a few degrees, for example between about 5° and about 10°, with respect to the axis C of the first opening 16. The functioning of the valve 1 is illustrated in figures from 8 to 11.

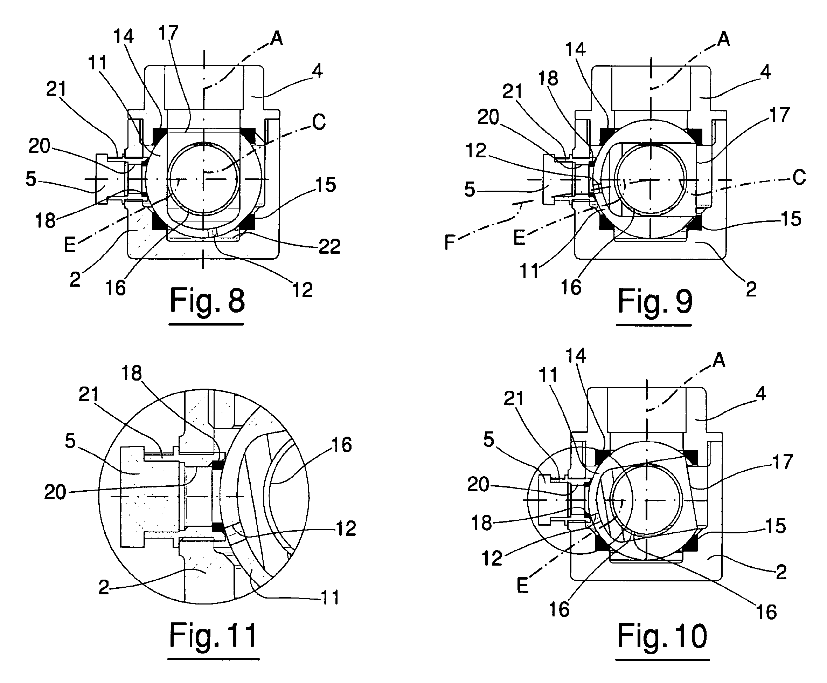

Figure 8 illustrates the first operating position of the shutter 11, in which the second opening 17 of the shutter 11 communicates with the inlet 4 of the valve body 2, while the first opening 16 communicates with the outlet 3 of the valve body 2, such as to establish a communication between the inlet 4 and the outlet 3, such as to enable combustible gas supply to the building dispensing plant.

The shutter 11 body completely obstructs the further inlet 20 of the valve body 2, while the third opening 12 of the shutter 11 is in a zone of the valve body comprised between a wall 25 of the valve body 2 and the second seal gasket 15, such that outflow of combustible gas is prevented from the further inlet 20 of the valve body 2, even if the closing cap 5 is not applied or removed. This operating position is thus a position of total security, destined to prevent intrusion or accidental escape of combustible gas through the further inlet 20 of the valve body 2 during normal functioning of the combustible gas distribution plant, when the valve 1 is in the open position.

Figure 9 illustrates the second operating position of the shutter 11, rotated by 90° in the clockwise direction with respect to the first operating position illustrated in figure 8. In this second operating position, the first opening 16 of the shutter 11 communicates with the outlet 3 of the valve body 2, the further opening 12 of the shutter 11 communicates with the further inlet 20 of the valve body 2 and the shutter body 11 completely obstructs the inlet 4 of the valve body 2.

This enables introducing a test gas into the building dispensing plant through the further inlet 20 of the valve body 2, the shutter 11 and the outlet 3 of the valve body without the risk that the pressurised test gas can reach the counter connected with the inlet 4 of the valve body 2 and get into the supply network of the combustible gas.

In the second operating position, if the further inlet 20 of the valve body 2 is closed by the cap 5, test gas injection into the building dispensing plant is prevented.

Figures 10 and 11 illustrate a third operating position of the shutter 11, which is obtained by rotating the shutter 11 in an anticlockwise direction by some degrees with respect to the position illustrated in figure 9. This third position prevents any communication between the inlet 4, the outlet 3 and the further inlet 20 of the valve body 2, such that combustible gas supply to the building dispensing network is prevented, as is any leaking of combustible gas from the further inlet 20 of the valve body 2, even if the closing cap 5 is not applied or is removed.

The third operating position is thus a safety position destined to prevent accidental leakage of combustible gases through the further inlet 20 of the valve body 2, during normal functioning of the combustible gas dispensing plane, when the valve 1 is in the closed position.

The angular distance between the second operating position of the shutter 11, illustrated in figure 9, and the third operating position, illustrated in figures 10 and 11, is in the manner of some degrees, for example it is comprised between 5° and 10°, and is preferably about 8°.

In other terms it can readily be understood from the figures that the valve is exclusively configurable between an activated condition (which can be defined by a plurality of relative positions between the valve body and the shutter reciprocally rotated by a few degrees in a clockwise or anticlockwise direction with respect to the condition of figure 8), in which the inlet 4 and the outlet 3 of the valve body 2 are set in fluid communication by the first and the second openings of the shutter 11, a test condition (figure 9) in which the further inlet 20 and the outlet 3 are set in fluid communication between the first or the second opening (and in more detail, the first) and the third opening 12 of the shutter 11 and a security condition (figure 10) in which the shutter is positioned such as to prevent any fluid communication between the inlet 4, the outlet 3 and the further inlet 20 of the valve body 2.

Note that the configurations illustrated in figures from 8 to 10 are the only ones possible (even though each of the configurations can comprise various relative angular positions between the valve body and the shutter as long as the respective fluid passage is allowed).

In other words the valve cannot be configured erroneously such that the inlet for the test 20 can communicate with the inlet 4 towards the gas distribution network or the counter.

When passing from the condition of figure 10 to the condition of figure 8, there is further never a potential communication between all the various openings of the valve body 2.

As soon as a communication channel opens between the inlet 4 and the outlet 3, the test channel is already closed (figures 11, 10 and 8).

In still other terms, the valve enables, whatever the configuration thereof, at most a communication between only two openings 3, 4 and 20, and never a contemporary communication between all three.

In the specific case of the embodiment (which might however take on a different structure as long as the above-described function is maintained) the set aim is attained also thanks to the presence of seal means 18 between the access 20 and the shutter 11 and the seal means 15 between the valve body 2 and the shutter 11.

In figures from 12 to 22, a second version of the valve 101 of the invention is illustrated, which comprises a hollow valve body 102 provided with an inlet 104 destined to be connected to a combustible gas supply network, for example of methane, and an outlet 103 destined to be connected to a dispensing plant of the combustible gas to a building. In the second version, the inlet 104 and the outlet 103 have respective axes G, G' which are parallel to one another and preferably coincide.

The valve body 102 is further provided with a further inlet 120 usable for introducing a pressurised test gas into the dispensing plant, in order to test the dispensing plant, with the aim of verifying that there are no leaks that might lead to infiltrations of the combustible gas into the building. The further inlet 120 has an axis H which is substantially perpendicular to the respective axes G, G' of the inlet 104 and the outlet 103. The further inlet 120 is connected to a connecting element 121, for introduction of the test gas, provided with a first seal gasket 118, and a closing element 105, for example a screw cap, for closing the inlet 120 when it is not used. The first seal gasket 118 serves to guarantee a gas seal between the connecting element 121 and the valve body 102, such that gas leakage cannot take place between the connecting element 121 and the valve body 102.

The valve 101 is destined to be connected to the combustible gas supply network through a gas flow gauge, commonly known as a counter. In other words, the valve 101 is connected by the inlet 104 thereof to the outlet of the counter and by the outlet 103 thereof to the building dispensing plant.

A shutter 111 is arranged internally of the valve 101 body 102, which shutter 111 is constituted by a hollow spherical element provided with a first opening 116 and a second opening 117, having respective axes I and I' which are parallel, and preferably coinciding. The first opening 116 and the second opening 117 are destined to enable communication between the inlet 104 and the outlet 103 of the valve body 102, through the shutter 111.

A seating 113 is afforded on the surface of the shutter 111, which seating 113 is destined to couple with an appendage 110 of a manoeuvring element 107 provided with a second seal gasket 119 and fixed, via a connecting element 108 and a bolt 109, to a knob 106, by means of which the manoeuvring element 107 is activated to command a rotation of the shutter 111. The second seal gasket 119 serves to guarantee a gas seal between the manoeuvring element 107 and the valve body 102, such that there can be no leakage of gas between the manoeuvring element 107 and the valve body 102.

A third seal gasket 114 and a fourth seal gasket 115 are further associated to the shutter 111, arranged on opposite sides of the obturator 111 and destined to guarantee a gas seal between the shutter 111 and the valve body 102, such that there can be no gas leakage between the shutter 111 and the valve body 102.

The shutter 111 is further provided with a third opening 112, destined to place the further inlet 120 of the valve body 102 in communication with the outlet 103, via the shutter 111, in order to enable introduction of pressurised test gas into the plant to be tested.

The dimensions of the third opening 112 are much smaller than those of the first opening 116 and the second opening 117 of the shutter 111.

The position and dimensions of the third opening 112 of the shutter 111 are selected such that when the shutter 111 is positioned in a first operating position, such as to place the inlet 104 and the outlet 103 of the valve body 102 in communication, in order to enable supply to the building dispensing plant by the combustible gas supply network, any communication between the inlet 104, the outlet 103 and the further inlet 120 is prevented. This guarantees against the risk that the further inlet 120 can communicate with the supply network or with the building dispensing plant, in the normal functioning of the plant, if, after the testing of the plant, with the shutter 111 in the first operating position (figure 19), the further inlet 120 is not closed, by mistake, with the screw cap 5, or if the screw cap 5 is removed. In this way the risk of combustible gas infiltrations into the building through the further inlet 120 of the valve body 102 is prevented.

The dimensions and the position of the third opening 112 of the shutter 111 are further chosen such as to enable the shutter 111, in a second operating position, to establish a communication between the further inlet 120 and the outlet 103 of the valve body 102, preventing at the same time there being a communication between the further inlet 120 and the inlet 104 of the valve body 102, or between the inlet 104 and the outlet 103, such as to prevent the pressurised test gas from being introduced into the valve body 102 and damaging it, or from getting into the supply network and mixing with the combustible gas therefrom. For example, the third opening 112 can have a diameter of about a tenth of the diameter of the first opening 116 and the second opening 117 and an axis L which is substantially perpendicular to the respective axes I, I' of the first opening 116 and the second opening 117. Further, the axis L of the third opening 112 is positioned at a distance of about half the radius of the shutter 111 with respect to a plane of symmetry of the shutter 111 that is perpendicular to the respective axes I, I' of the first opening 116 and the second opening 117.

The functioning of the valve 101 is illustrated in figures from 19 to 22.

Figure 19 illustrates the first operating position of the shutter 111, in which the second opening 117 of the shutter 111 communicates with the inlet 104 of the valve body 102, while the first opening 116 communicates with the outlet 103 of the valve body 102, such as to establish a communication between the inlet 104 and the outlet 103, such as to enable combustible gas supply to the building dispensing plant.

The shutter 111 body completely obstructs the further inlet 120 of the valve body 102, while the third opening 112 of the shutter 111 is in a zone of the valve body comprised between the third seal gasket 114 and the fourth seal gasket 115, such that outflow of combustible gas passing through the valve body 102 cannot reach the further inlet 120 and exit therefrom.

Thus leakage of combustible gas from the further inlet 120 of the valve body 2 is prevented, even if the closing cap 105 is not applied or is removed.

This operating position is thus a position of total security, destined to prevent intrusion or accidental escape of combustible gas through the further inlet 120 of the valve body 102 during normal functioning of the combustible gas distribution plant, when the valve 1 is in the open position.

Figure 20 illustrates the second operating position of the shutter 111, rotated by 90° in the anticlockwise direction with respect to the first operating position illustrated in figure 19. In this second operating position, the first opening 116 of the shutter 111 communicates with the further inlet 120 of the valve body 102, the further opening 112 of the shutter 111 communicates with the outlet 103 of the valve body 102 and the body of the shutter 111 completely obstructs the inlet 104 of the valve body 102.

This enables introduction of a test gas into the building dispensing plant through the further inlet 120 of the valve body 102, the shutter 111 and the outlet 103 of the valve body without the risk that the pressurised test gas can reach the counter connected with the inlet 104 of the valve body 102 and get into the supply network of the combustible gas.

In the second operating position, if the further inlet 120 of the valve body 102 is closed by the cap 105, test gas injection into the building dispensing plant is prevented.

Figures 21 and 22 illustrate a third operating position of the shutter 111, which is obtained by rotating the shutter 111 in a clockwise direction by some degrees with respect to the position illustrated in figure 20. This third operating position prevents any communication between the inlet 104, the outlet 103 and the further inlet 120 of the valve body 102, such that combustible gas supply to the building dispensing network is prevented, as is any leaking of combustible gas from the further inlet 120 of the valve body 102, even if the closing cap 105 is not applied or is removed.

The third operating position is thus a security position destined to prevent accidental leakage of combustible gases through the further inlet 120 of the valve body 102, during normal functioning of the combustible gas dispensing plane, when the valve 101 is in the closed position.

The angular distance between the second operating position of the shutter 111, illustrated in figure 20, and the third operating position, illustrated in figures 21 and 22, is in the manner of some degrees, for example it is comprised between 5° and 10°, and is preferably about 8°.

In this embodiment too, as in the preceding one, the channels and the openings of the shutter can be so dimensioned, as can their geometry and position, the respective sealing means and the valve body, as to prevent any contemporary fluid communication between more than two of the inlets 104, 120 and the outlet 103. It is also possible to prevent communication between the inlet for the test and the counter/gas network, preventing the drawbacks described in the prior art.

The above is also (though not necessarily) due to the particular offset position of the test channel 112 of the shutter (see figures 19-21).

By positioning the channel 112 laterally and opportunely arranging the seal gaskets, the predetermined security objectives can be more simply achieved.

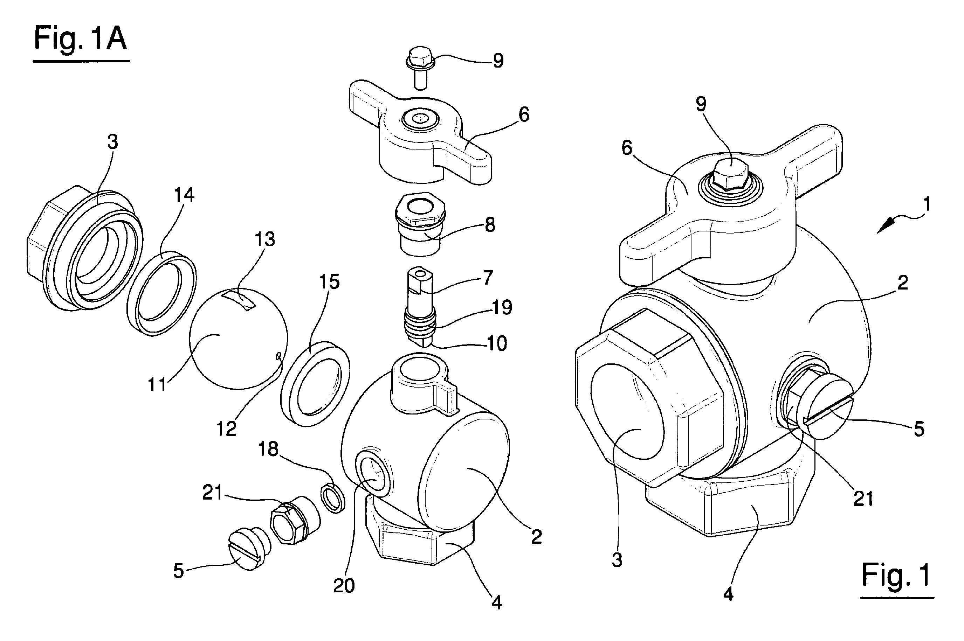

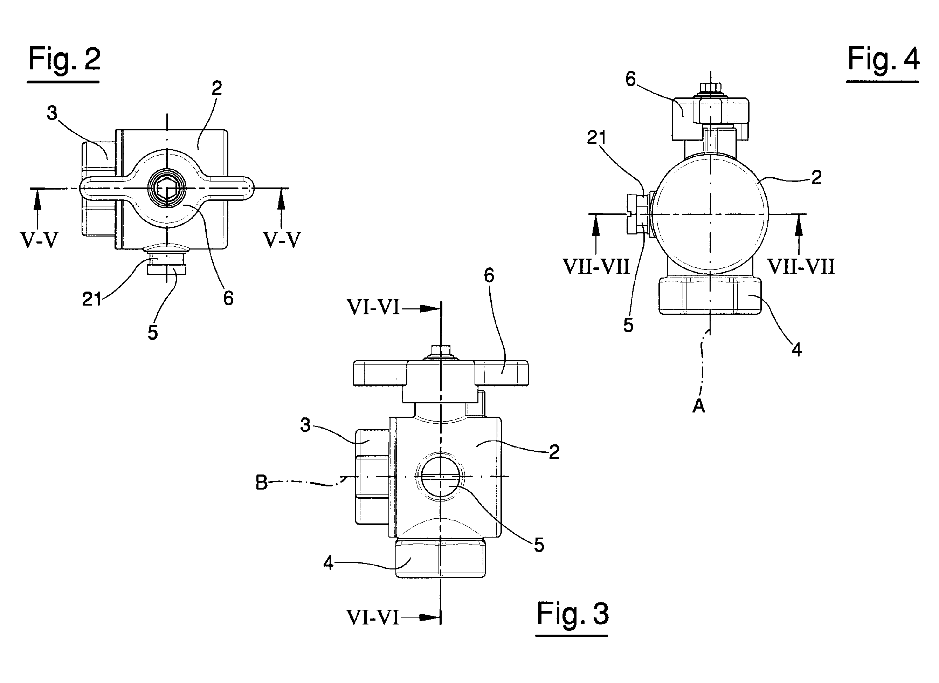

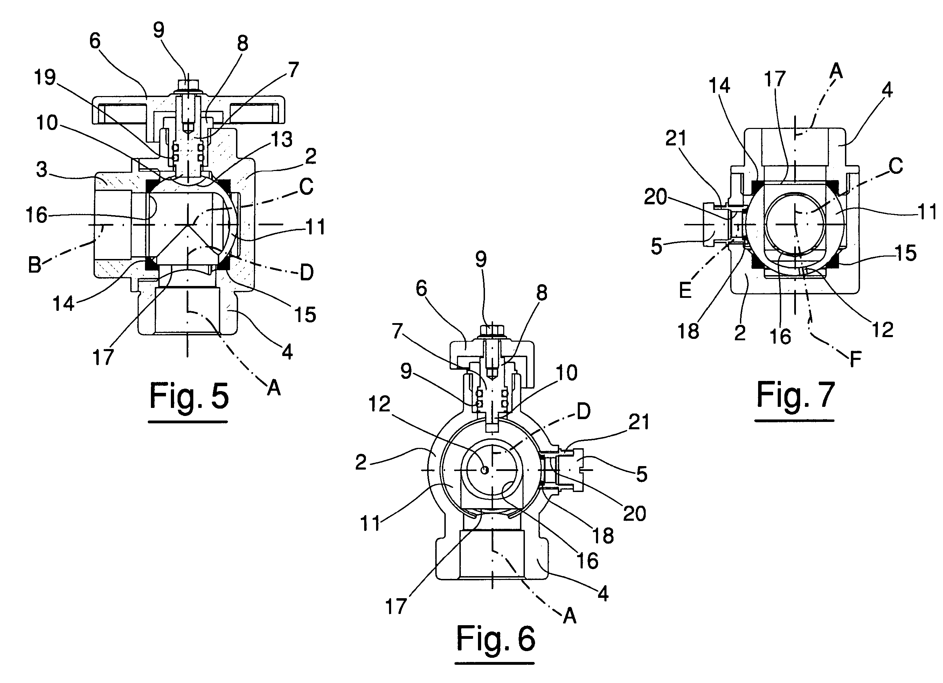

Figures from 23 to 28 illustrate a third version of a valve 1 according to the invention. As can be observed, the embodiment substantially coincides with the first embodiment (figures 1-11) and for this reason the same numerical references have been used to indicate corresponding parts (or identical parts).

There are only a few small constructional differences, connected for example to the test channel which is conformed in the special manner illustrated in figure 23, making the connection and the verification operations easier inasmuch as the channel is both inclined and more external with respect to the valve body (as well as being of a piece there-with).

By inclining the axis F more significantly with respect to the axis C, in the movement from the closed condition (figure 27) towards the open condition (in sequence figure 28 and figure 26), the test conduit 12 is immediately intercepted by the seal 15, preventing possible fluid communication between the test conduit and the gas supply.

Note that the positions of figures 26, 27 and 28 coincide with those of figures 8, 9 and 10 respectively.

In the practical actuation, the materials, dimensions and carrying-out details can be different from those indicated, but will be technically-equivalent thereto, without forsaking the ambit of the present invention, as defined in the claims.

## Claims

1. Shut off and test valve for gas plants comprising a base body (2; 102) having an inlet (4; 104) for entry of a fluid into the base body, an outlet (3; 103) for exit of the fluid from the base body and a further test inlet (20; 120), a hollow shutter (11; 111), in particular spherical, having a first opening (16; 116), a second opening (17; 117) and a third opening (12; 112) in fluid communication with each other inside the shutter itself, the valve being exclusively configurable between a use condition in which the inlet (4; 104) and the outlet (3; 103) of the base body (2; 102) are in fluid communication through the first and the second openings of the shutter, a test condition in which the further inlet (20; 120) and the outlet (3; 103) are placed in fluid communication through the first or the second opening and the third opening (12; 112) of the shutter (11; 111) and a security condition in which the shutter is positioned so that any fluid communication is prevented between said inlet (4; 104), outlet (3; 103) and further inlet (20; 120) of the base body (2; 102).

2. Valve (1; 101) according to claim 1 in which said third opening (12; 112) exhibits considerably smaller dimensions than dimensions of the second opening (17; 117), in particular said third opening (12; 112) having a diameter equal to about one tenth of the diameter of said first opening (16; 116) and of the second opening (17; 117).

3. Valve (1; 101) according to claim 1, or 2, in which the use condition and/or the security condition each comprise a plurality of relative positions between the base body and the shutter.

4. Valve (1) according to anyone of claims 1 to 3, in which said inlet (4) and outlet (3) have substantially orthogonal respective axes (A; B), in particular said further inlet (20) having an axis (C) that is substantially orthogonal to respective axis (A; B) of said inlet (4) and outlet (3).

5. Valve (1) according to claim 4 in which said first opening (16) and second opening (17) have substantially orthogonal respective axis (C; D) , in particular said third opening (12) having an axis that is (F) coplanar with the axis (D) of the second opening (17) and inclined by some degrees with respect thereto, an more particularly the axis (F) of said third opening (12) having an inclination comprised between about 5° and about 10°, with respect to axis (C) of said second opening (17).

6. Valve (101) according to any one of claims 1 to 3 in which said inlet (104) and said outlet (103) have respectively parallel axis (G, G'), and in particular coincident axes, for example said further inlet (120) having an axis (H) that is substantially orthogonal to the respective axis (G; G') of said inlet (104) and said outlet (103).

7. Valve (101) according to claim 6, in which said first opening (116) and said second opening (117) have substantially parallel respective axes (I; I'), and in particular coincident, and more in particualr said third opening (112) having an axis (L) that is substantially orthogonal to the respective axis (I, I') of said first opening (116) and of said second opening (117), in particular the axis (L) of said third opening (112) being positioned at a distance of about a half of a radius of the shutter (111) with respect to a plane of symmetry of the shutter (111) that is perpendicular to the respective axis (I, I') of said first opening (116) and of said second opening (117).

8. Valve (1; 101) according to any one of the previous claims, in which said shutter (11; 111) is movable through a manoeuvring element (7; 107) connected to a knob and in detail comprises an appendage (10; 110) destined to engage in a seating (13; 113) of said shutter (11; 111).

9. Valve (1; 101) according to any one of the previous claims, in which a connecting element (21; 121) is associated to said further inlet (20; 120), first sealing means (18; 118) being associated to said connection element (21; 121), which sealing means are destined to define a gas seal between said connection element (21; 121) and said base body (2; 102), in particular said connection element (21; 121) further comprising a closure element (5; 105) of said further inlet (20; 120), second sealing means (19; 119) being for example associated to said manoeuvring element (7; 107), said second sealing means being destined to define a gas seal between said manoeuvring element (7; 107) and said base body (2; 102), even more in detail third sealing means (14; 114, 118) and fourth sealing means (15; 115, 119) being associated to said shutter (11; 111), said third and fourth sealing means being destined to define a gas seal between said shutter (11; 111) and said valve body (2; 102), for example said third sealing means (14; 114, 118) and said fourth sealing means (15; 115, 119) being located in opposite positions with respect to said shutter (11; 111).

## Patentansprüche

1. Absperr- und Probeventil für Vergasungsanlagen, umfassend einen Grundkörper (2; 102), der einen Einlass (4; 104) zum Eintritt einer Flüssigkeit in den Grundkörper, einen Auslass (3; 103) zum Austrittder Flüssigkeit aus dem Grundkörper und einen weiteren Probeeinlass (20; 120) aufweist, einen Hohlverschluss (11; 111), insbesondere kugelförmig, der eine erste Öffnung (16; 116), eine zweite Öffnung (17; 117) und eine dritte Öffnung (12; 112) aufweist, die miteinander innerhalb des Verschlusses selbst in Fluidverbindung sind, wobei das Ventil ausschließlich konfigurierbar ist zwischen einem Verwendungszustand, in dem der Einlass (4; 104) und der Auslass (3; 103) des Grundkörpers (2; 102) durch die ersten und zweiten Öffnungen des Verschlusses in Fluidverbindung sind, einem Probezustand, in dem der weitere Einlass (20; 120) und der Auslass (3; 103) durch die erste oder die zweite Öffnung und die dritte Öffnung (12; 112) des Verschlusses (11; 111) in Fluidverbindung platziert werden, und einem Sicherheitszustand, in dem der Verschluss so positioniert ist, dass jegliche Fluidverbindung zwischen dem Einlass (4; 104), dem Auslass (3; 103) und dem weiteren Einlass (20; 120) des Grundkörpers (2; 102) verhindert wird.

2. Ventil (1; 101) nach Anspruch 1, in dem die dritte Öffnung (12; 112) wesentlich kleinere Abmessungen besitzt, als die Abmessungen der zweiten Öffnung (17; 117), insbesondere wobei die dritte Öffnung (12; 112) einen Durchmesser aufweist, der ungefähr gleich einem Zehntel des Durchmessers der ersten Öffnung (16; 116) und der zweiten Öffnung (17; 117) ist.

3. Ventil (1; 101) nach Anspruch 1 oder 2, in dem der Verwendungszustand und/oder der Sicherheitszustand jeweils eine Mehrzahl von relativen Positionen zwischen dem Grundkörper und dem Verschluss umfassen.

4. Ventil (1) nach einem der Ansprüche 1 bis 3, in dem der Einlass (4) und der Auslass (3) im Wesentlichen orthogonale respektive Achsen (A; B) aufweisen, insbesondere wobei der weitere Einlass (20) eine Achse C aufweist, die im Wesentlichen orthogonal zur respektiven Achse (A; B) des Einlasses (4) und Auslasses (3) ist.

5. Ventil (1) nach Anspruch 4, in dem die erste Öffnung (16) und die zweite Öffnung (17) im Wesentlichen orthogonale respektive Achsen (C; D) aufweisen, insbesondere wobei die dritte Öffnung (12) eine Achse aufweist, die (F) komplanar mit der Achse (D) der zweiten Öffnung (17) und in Bezug zu dieser einige Grad geneigtist, und weiter insbesondere wobei die Achse (F) der dritten Öffnung (12) eine Neigung in Bezug auf die Achse (C) der zweiten Öffnungaufweist, die zwischen 5° und 10° umfasst ist.

6. Ventil (101) nach einem der Ansprüche 1 bis 3, in dem der Einlass (104) und der Auslass (103) respektive parallele Achsen (G, G') aufweisen, und insbesondere zusammenfallende Achsen, zum Beispiel wobei der weitere Einlass (120) eine Achse (H) aufweist, die im Wesentlichen orthogonal zu der respektiven Achse (G; G') des Einlasses (104) und des Auslasses (103) ist.

7. Ventil (101) nach Anspruch 6, in dem die erste Öffnung (116) und die zweite Öffnung (117) im Wesentlichen parallele respektive Achsen (I; I') aufweisen, und insbesondere zusammenfallende, und weiter insbesondere wobei die dritte Öffnung (112) eine Achse (L) aufweist, die im Wesentlichen orthogonal zur respektiven Achse (I, I') der ersten Öffnung (116) und der zweiten Öffnung (117) ist, insbesondere wobei die Achse (L) der dritten Öffnung (112) in einem Abstand von ungefähr einer Hälfte eines Radius des Verschlusses (111) in Bezug auf eine Symmetrieebene des Verschlusses (111) positioniert ist, die rechtwinklig zur respektiven Achse (I, I') der ersten Öffnung (116) und der zweiten Öffnung (117) ist.

8. Ventil (1; 101) nach einem der vorhergehenden Ansprüche, in dem der Verschluss (11; 111) durch ein Verstellelement (7; 107) bewegbar ist, das mit einem Griff verbunden ist und im Detail einen Fortsatz (10; 110) umfasst, der dafür vorgesehen ist, in eine Aufnahme (13; 113) des Verschlusses (11; 111) einzugreifen.

9. Ventil (1; 101) nach einem der vorhergehenden Ansprüche, in dem ein Verbindungselement (21; 121) mit dem weiteren Einlass (20; 120) assoziiert ist, wobei erste Dichtungsmittel (18; 118) mit dem Verbindungselement (21; 121) assoziiert sind, wobei die Dichtungsmittel dafür vorgesehen sind, eine Gasdichtung zwischen dem Verbindungselement (21; 121) und dem Grundkörper (2; 102) zu definieren, insbesondere wobei das Verbindungselement (21; 121) weiter ein Schließelement (5; 105) des weiteren Einlasses (20; 120) umfasst, wobei zweite Dichtungsmittel (19; 119) zum Beispiel mit dem Verstellelement (7; 107) assoziiert sind, wobei die zweiten Dichtungsmittel dafür vorgesehen sind, eine Gasdichtung zwischen dem Verstellelement (7; 107) und dem Grundkörper (2; 102) zu definieren, wobei detaillierterdritte Dichtungsmittel (14; 114, 118) und vierte Dichtungsmittel (15; 115, 119) mit dem Verschluss (11; 111) assoziiert sind, wobei die dritten und vierten Dichtungsmittel dafür vorgesehen sind, eine Gasdichtung zwischen dem Verschluss (11; 111) und dem Ventilkörper (2; 102) zu definieren, wobei sich zum Beispiel die dritten Dichtungsmittel (14; 114, 118) und die vierten Dichtungsmittel (15; 115, 119) in Bezug auf den Verschluss (11; 111) an gegenüberliegenden Positionen befinden.

## Revendications

1. Vanne de fermeture et d'essai pour des installations de gaz comprenant un corps de base (2 ; 102) ayant une entrée (4 ; 104) pour l'entrée d'un fluide dans le corps de base, une sortie (3 ; 103) pour la sortie du fluide du corps de base et une entrée d'essai supplémentaire (20 ; 120), un obturateur creux (11 ; 111), en particulier sphérique, ayant une première ouverture (16 ; 116), une deuxième ouverture (17 ; 117) et une troisième ouverture (12 ; 112) en communication de fluide entre elles à l'intérieur de l'obturateur lui-même, la vanne pouvant être exclusivement configurée entre une condition d'utilisation dans laquelle l'entrée (4 ; 104) et la sortie (3 ; 103) du corps de base (2 ; 102) sont en communication de fluide par le biais des première et deuxième ouvertures de l'obturateur, une condition d'essai dans laquelle l'entrée supplémentaire (20 ; 120) et la sortie (3 ; 103) sont placées en communication de fluide par le biais de la première ou de la deuxième ouverture et de la troisième ouverture (12 ; 112) de l'obturateur (11 ; 111) et une condition de sécurité dans laquelle l'obturateur est positionné de sorte que toute communication de fluide est empêchée entre ladite entrée (4 ; 104), la sortie (3 ; 103) et l'entrée supplémentaire (20 ; 120) du corps de base (2 ; 102).

2. Vanne (1 ; 101) selon la revendication 1, dans laquelle ladite troisième ouverture (12 ; 112) laisse apparaître des dimensions considérablement plus petites que les dimensions de la deuxième ouverture (17 ; 117), en particulier ladite troisième ouverture (12 ; 112) ayant un diamètre égal à environ un dixième du diamètre de ladite première ouverture (16 ; 116) et de la deuxième ouverture (17 ; 117).

3. Vanne (1 ; 101) selon la revendication 1 ou 2, dans laquelle la condition d'utilisation et/ou la condition de sécurité comprennent chacune une pluralité de positions relatives entre le corps de base et l'obturateur.

4. Vanne (1) selon l'une quelconque des revendications 1 à 3, dans laquelle ladite entrée (4) et ladite sortie (3) ont des axes (A ; B) respectifs sensiblement orthogonaux, en particulier ladite entrée supplémentaire (20) ayant un axe (C) qui est sensiblement orthogonal par rapport à l'axe (A ; B) respectif de ladite entrée (4) et de ladite sortie (3).

5. Vanne (1) selon la revendication 4, dans laquelle ladite première ouverture (16) et ladite deuxième ouverture (17) ont des axes (C ; D) sensiblement orthogonaux, en particulier ladite troisième ouverture (12) ayant un axe (F) qui est coplanaire avec l'axe (D) de la deuxième ouverture (17) et incliné de quelques degrés par rapport à ce dernier, encore plus particulièrement, l'axe (F) de ladite troisième ouverture (12) ayant une inclinaison comprise entre environ 5° et environ 10°, par rapport à l'axe (C) de ladite deuxième ouverture (17).

6. Vanne (101) selon l'une quelconque des revendications 1 à 3, dans laquelle ladite entrée (104) et ladite sortie (103) ont des axes (G, G') respectivement parallèles, et en particulier des axes coïncidents, par exemple ladite entrée supplémentaire (120) ayant un axe (H) qui est sensiblement orthogonal par rapport aux axes (G, G') respectifs de ladite entrée (104) et de ladite sortie (103).

7. Vanne (101) selon la revendication 6, dans laquelle ladite première ouverture (116) et ladite deuxième ouverture (117) ont des axes (I; I') respectifs sensiblement parallèles, et en particulier coïncidents, et encore plus particulièrement ladite troisième ouverture (112) ayant un axe (L) qui est sensiblement orthogonal aux axes (I, I') respectifs de ladite première ouverture (116) et de ladite deuxième ouverture (117), en particulier l'axe (L) de ladite troisième ouverture (112) étant positionné à une distance représentant environ la moitié d'un rayon de l'obturateur (111) par rapport à un plan de symétrie de l'obturateur (111) qui est perpendiculaire aux axes (I, I') respectifs de ladite première ouverture (116) et de ladite deuxième ouverture (117).

8. Vanne (1 ; 101) selon l'une quelconque des revendications précédentes, dans laquelle ledit obturateur (11 ; 111) est mobile par le biais d'un élément de manoeuvre (7 ; 107) raccordé à un bouton et comprend de manière détaillée un appendice (10 ; 110) destiné à se mettre en prise dans un siège (13 ; 113) dudit obturateur (11 ; 111).

9. Vanne (1; 101) selon l'une quelconque des revendications précédentes, dans laquelle un élément de raccordement (21 ; 121) est associé à ladite entrée supplémentaire (20 ; 120), des premiers moyens d'étanchéité (18 ; 118) étant associés audit élément de raccordement (21 ; 121), lesquels moyens d'étanchéité sont destinés à définir un joint d'étanchéité au gaz entre ledit élément de raccordement (21 ; 121) et ledit corps de base (2 ; 102), en particulier ledit élément de raccordement (21 ; 121) comprenant en outre un élément de fermeture (5 ; 105) de ladite entrée supplémentaire (20 ; 120), des deuxièmes moyens d'étanchéité (19 ; 119) étant par exemple associés audit élément de manoeuvre (7 ; 107), lesdits deuxièmes moyens d'étanchéité étant destinés à définir un joint d'étanchéité au gaz entre ledit élément de manoeuvre (7 ; 107) et ledit corps de base (2 ; 102), même de manière plus détaillée, des troisièmes moyens d'étanchéité (14 ; 114, 118) et des quatrièmes moyens d'étanchéité (15 ; 115, 119) étant associés audit obturateur (11 ; 111), lesdits troisièmes et quatrièmes moyens d'étanchéité étant destinés à définir un joint d'étanchéité au gaz entre ledit obturateur (11 ; 111) et ledit corps de vanne (2 ; 102), par exemple lesdits troisièmes moyens d'étanchéité (14 ; 114, 118) et lesdits quatrièmes moyens d'étanchéité (15 ; 115, 119) étant positionnés dans des positions opposées par rapport audit obturateur (11 ; 111).
